# EUROPEAN PATENT APPLICATION

(11) **EP 4 123 144 A1**
(43) Date of publication of application: **25.01.2023**
(21) Application number: 22185129.8
(22) Date of filing: 15.07.2022
(51) Int. Cl.: F02C 3/22, F02C 7/22, F02C 7/228, F02C 7/232

(54) **MANIFOLD PURGE FOR GASEOUS FUEL SYSTEM OF ENGINE**

(30) Priority: 19.07.2021 US 202117379085
(71) Applicant: PRATT & WHITNEY CANADA CORP., Longueuil, Québec J4G 1A1 (CA)
(72) Inventor: DILLON, Thomas, (01BE5) Longueuil, J4G 1A1 (CA); MILLER, Todd, (01BE5) Longueuil, J4G 1A1 (CA)
(74) Representative: Dehns

(57) **Abstract**

Methods and systems for operating an engine coupled to a fuel system having at least one fuel manifold configured to supply fuel to a combustor of the engine are described. The method comprises, when the engine is active, supplying fuel to the combustor by supplying gaseous fuel from a gaseous fuel supply to the at least one fuel manifold, and when the engine is inactive, purging the at least one fuel manifold by supplying inert gas from an inert gas supply to the at least one fuel manifold.

## Description

### TECHNICAL FIELD

The disclosure relates generally to engines that operate with a gaseous fuel system.

### BACKGROUND OF THE ART

Fuels which exist in the liquid state at room temperature are called liquid fuels. Examples of liquid fuels are kerosene, petrol and diesel. Fuels that exist in the gaseous state at room temperature are called gaseous fuels. Examples of gaseous fuels are hydrogen gas, natural gas, butane and propane. Engines in the aerospace industry have long been designed to operate with liquid fuels. There is growing interest in using zero carbon fuel, such as hydrogen, to propel aircraft. While the methods of operating aircraft engines based on liquid fuel are suitable for their purposes, improvements are needed to adapt to gaseous fuel.

### SUMMARY

In one aspect, there is provided a method for operating an engine coupled to a fuel system having at least one fuel manifold configured to supply fuel to a combustor of the engine. The method comprises, when the engine is active, supplying fuel to the combustor by supplying gaseous fuel from a gaseous fuel supply to the at least one fuel manifold, and when the engine is inactive, purging the at least one fuel manifold by supplying inert gas from an inert gas supply to the at least one fuel manifold.

In another aspect, there is provided a system for operating an engine having at least one fuel manifold configured to supply fuel to a combustor of the engine. The system comprises a processor and a non-transitory computer-readable medium having stored thereon program code. The program code is executable by the processor for when the engine is active, supplying fuel to the combustor by supplying gaseous fuel from a gaseous fuel supply to the at least one fuel manifold, and when the engine is inactive, purging the at least one fuel manifold by supplying inert gas from an inert gas supply to the at least one fuel manifold.

In a further aspect, there is provided a system comprising an engine having a combustor and a fuel system coupled to the engine. The fuel system comprises an arrangement of components connected between an inert gas supply, a gaseous fuel supply and at least one fuel manifold, the at least one fuel manifold fluidly connected to the combustor via at least one set of nozzles, the arrangement configurable between a fuel configuration to allow gaseous fuel to flow from the gaseous fuel supply to the at least one manifold and a purge configuration to allow inert gas to flow from the inert gas supply to the at least one fuel manifold. A controlled is coupled to the engine and the fuel system and configured for, in response to receiving a command to purge the at least one fuel manifold, setting the arrangement of components to the purging configuration.

Features of embodiments are set forth in the dependent claims.

### DESCRIPTION OF THE DRAWINGS

Reference is now made to the accompanying figures in which:
Fig. 1 is a schematic cross sectional view of an example gas turbine engine;
Fig. 2A is a block diagram of an example fuel system for gaseous fuel;
Fig. 2B is a block diagram of an example fuel system for gaseous and liquid fuel;
Fig. 3 is a flowchart of a method for purging one or more fuel manifolds concurrently;
Fig. 4 is a flowchart of a method for purging one or more fuel manifolds sequentially; and
Fig. 5 is a block diagram of an example computing device.

### DETAILED DESCRIPTION

The present disclosure is directed to methods and systems for operating an engine having at least one fuel manifold configured to supply gaseous fuel to a combustor of the engine. Fuels that exist in the gaseous state at room temperature are called gaseous fuels. Examples of gaseous fuels are hydrogen gas, natural gas, butane and propane. The properties of gaseous fuel differ from the properties of liquid fuel. For example, gaseous fuel is less dense than air and therefore, unburnt gaseous fuel cannot be drained via a gravity-based manifold purging system or a scavenging system as used with tradition liquid fuels. Residual gaseous fuel remaining in the manifold can cause instability and/or engine damage. There is described herein methods and system for purging a manifold of unburnt gaseous fuel of a fuel system for an engine.

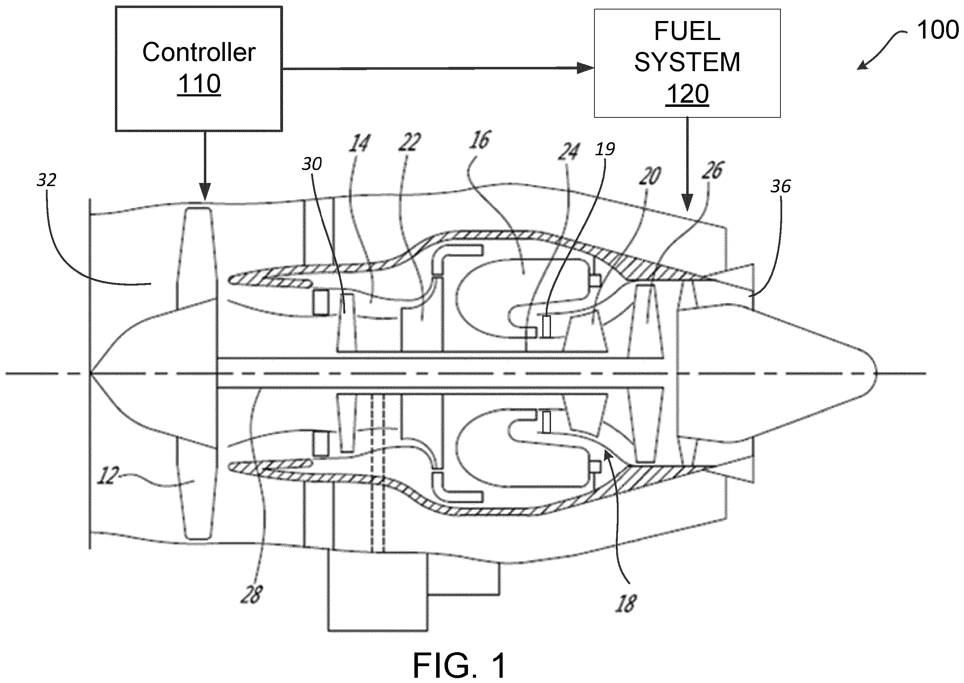

FIG. 1 illustrates an example 100 of a type provided for use in subsonic flight. The engine 100 of Fig. 1 is a turbofan engine that generally comprises in serial flow communication, a fan 12 through which ambient air is propelled toward an inlet 32, a compressor section 14 for pressurizing the air, a combustor 16 in which the compressed air is mixed with fuel and ignited for generating an annular stream of hot combustion gases, and a turbine section 18 for extracting energy from the combustion gases, which exit via an exhaust 36. High-pressure rotor(s) of the turbine section 18 (referred to as "HP turbine rotor(s) 20") are mechanically linked to high-pressure rotor(s) of the compressor section 14 (referred to as "HP compressor rotor(s) 22") through a high-pressure shaft 24. The turbine section 18 includes a vane 19 between the combustor 16 and the HP turbine rotor(s) 20. Low-pressure rotor(s) of the turbine section 18 (referred to as "LP turbine rotor(s) 26") are mechanically linked to the low-pressure rotor(s) of the compressor section 14 (referred to as "LP compressor rotor(s) 30") and/or the fan rotor 12 through a concentric low-pressure shaft 28 extending within the high-pressure shaft 24 and rotating independently therefrom.

Although Fig. 1 illustrates the engine 100 as a turbofan engine, it should be noted, however, that the techniques described herein are considered to be applicable to other types of gas turbine engines, including turbofan, turboprop, and turbojet engines, and to other types of combustion engines, including Wankel engines and reciprocating engines. As such, the expression "combustor" should be understood to include any sort of combustion chamber. In some embodiments, the engine forms part of an aircraft. In some embodiments, the engine forms part of a vehicle for land or marine applications. Alternatively, the engine is used in an industrial setting, for example for power generation or as an auxiliary power unit.

Control of the operation of the engine 100 can be effected by one or more control systems, for example a controller 110, which is communicatively coupled to the engine 100. The operation of the engine 100 can be controlled by way of one or more actuators, mechanical linkages, hydraulic systems, and the like. The controller 110 can be coupled to the actuators, mechanical linkages, hydraulic systems, and the like, in any suitable fashion for effecting control of the engine 100. The controller 110 can modulate the position and orientation of variable geometry mechanisms within the engine 100, the bleed level of the engine 100, and fuel flow, based on predetermined schedules or algorithms. In some embodiments, the controller 110 includes one or more FADEC(s), electronic engine controller(s) (EEC(s)), or the like, that are programmed to control the operation of the engine 100.

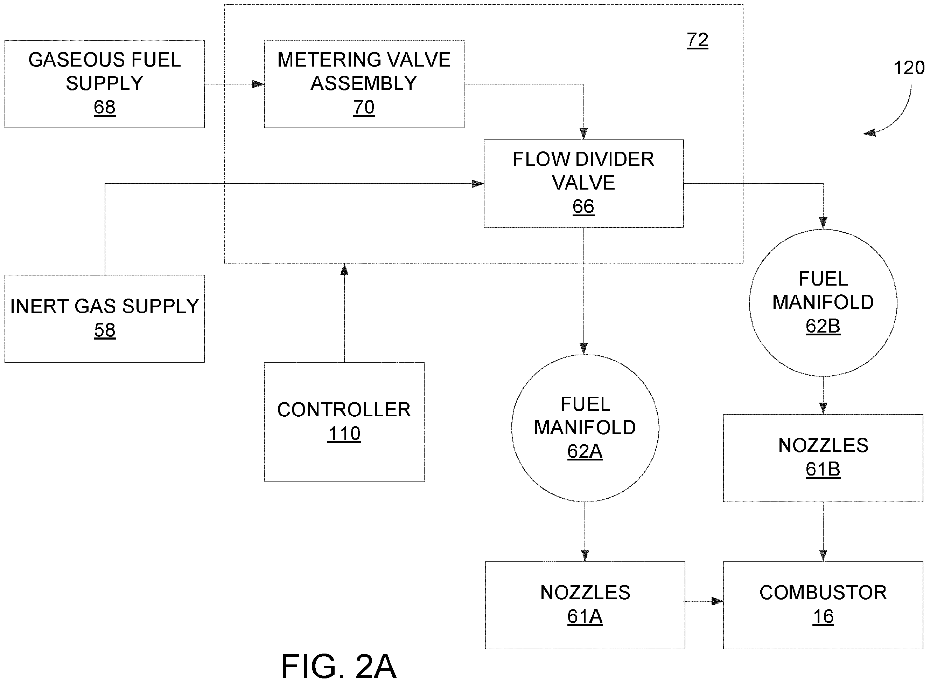

The controller 110 is configured to regulate fuel flow provided to the engine 100 via a fuel system 120. Fig. 2A is a schematic illustration of an exemplary fuel system 120 of a gas turbine engine, such as engine 100. The fuel system 120 has at least one fuel manifold configured to supply gaseous fuel to a combustor of the engine. In the illustrated embodiment, a first fuel manifold 62A is fluidly connected between a gaseous fuel supply 68 and a combustor 16 of the engine 100. A second fuel manifold 62B is fluidly connected between the gaseous fuel supply 68 and the combustor 16 of the engine 100. Although two fuel manifolds 62A, 62B are illustrated, a single manifold or more than two manifolds may be present. The fuel manifolds 62A, 62B may be interconnected or independent from one another and/or from other fuel manifolds. The fuel manifolds 62A, 62B may supply gaseous fuel to the combustor 16 via one or more sets of fuel nozzles 61A, 61B, respectively. In some embodiments, first and second sets of fuel nozzles 61A, 61B may be substantially the same or different. In some operating situations, different amounts of gaseous fuel may be supplied to each fuel manifold.

The gaseous fuel is provided to the respective fuel manifolds 62A, 62B through an arrangement 72 of components such as valves, valve controllers, pressure transducers, pressure regulators, and the like. The arrangement 72 may be configurable (e.g., actuatable) between a plurality of gaseous fuel configurations to selectively provide gaseous fuel to the fuel manifold 62A, the fuel manifold 62B, and/or both. The arrangement 72 may include a metering valve assembly 70, which may include one or more solenoid-operated valves, one or more one-way valves, one or more (pressure or flow) regulator, flow diverter valve(s), and/or any other flow control device(s) configured to permit/stop/regulate fluid flow or pressure across the arrangement 72. In some embodiments, the arrangement 72 comprises one or more flow divider valve 66 that may or may not be part of the metering valve assembly 70. The flow divider valve 66 may be a hydraulic device, an electronic device or an electronically-controlled hydraulic device that can separate a flow into two or more parts. The arrangement 72 and/or flow divider valve 66 may comprise one or more embodiments of (flow divider) valves, or assemblies.

The arrangement 72 may be configured to supply gaseous fuel from the gaseous fuel supply 68 to the first and second fuel manifolds 62A, 62B in a first gaseous fuel configuration of the components of the arrangement 72. The arrangement 72 may be configured to supply gaseous fuel to the first fuel manifold 62A and stop supplying gaseous fuel to the second fuel manifold 62B in a second gaseous fuel configuration of the components of the arrangement 72. The arrangement 72 may be configured to stop supplying gaseous fuel to the first fuel manifold 62A and supply gaseous fuel to the second fuel manifold 62B in a third gaseous fuel configuration of the components of the arrangement 72. The gaseous fuel supply 68 may be configured to provide fuel flow to the first and second fuel manifolds 62A, 62B via the metering valve assembly 70 and the flow divider valve 66. The flow divider valve 66 may supply gaseous fuel to the first fuel manifold 62A via a first downstream fuel line, and to the second fuel manifold 62B via a second downstream fuel line. A fuel pump may be operatively disposed between the gaseous fuel supply 68 and the flow divider valve 66, for example as part of the arrangement 72 or externally thereto.

When the engine 100 is active (i.e. is in operation), gaseous fuel is supplied to the combustor 16 from the gaseous fuel supply 68 to at least one fuel manifold 62A, 62B. An "active" engine, also known as being in a running state, is when the combustor is lit and the engine core is spinning. When the engine is inactive (i.e. is not in operation), at least one of the fuel manifolds 62A, 62B, is purged by supplying inert gas from an inert gas supply 58 to a respective one of the fuel manifolds 62A, 62B. An inactive engine refers to the state of the engine prior to ignition, such that no fuel is consumed and no output power is generated. The inert gas supply 58 is fluidly connected to the fuel manifolds 62A, 62B via the arrangement 72. The arrangement 72 may be configured to supply inert gas from the inert gas supply 58 to the first and/or second fuel manifold 62A, 62B in one or more purging configuration of the arrangement 72. As used herein, "inert gas" is understood to mean a non-combustible gas which may be composed of a) a single non-combustible gas; b) a mixture of non-combustible gases; or c) a mixture of non-combustible gas(es) and reactive gas(es) where the overall mixture is non-combustible. Examples of inert gases are Nitrogen, Argon, and Helium.

In some embodiments, and as shown in Fig. 2A, the inert gas supply 58 may be coupled to the flow divider valve 66 such that gaseous fuel and inert gas are selectively provided to the fuel manifolds 62A, 62B. Alternatively, a separate and independent valve or valve assembly within the arrangement 72 may be used to allow the inert gas to flow from the inert gas supply 58 to the first and/or second manifold 62A, 62B, while the flow divider valve 66 and/or the metering valve assembly 70 and/or other components of the arrangement 72 are configured to stop flow of gaseous fuel from the gaseous fuel supply 68 to the first and/or second manifold 62A, 62B.

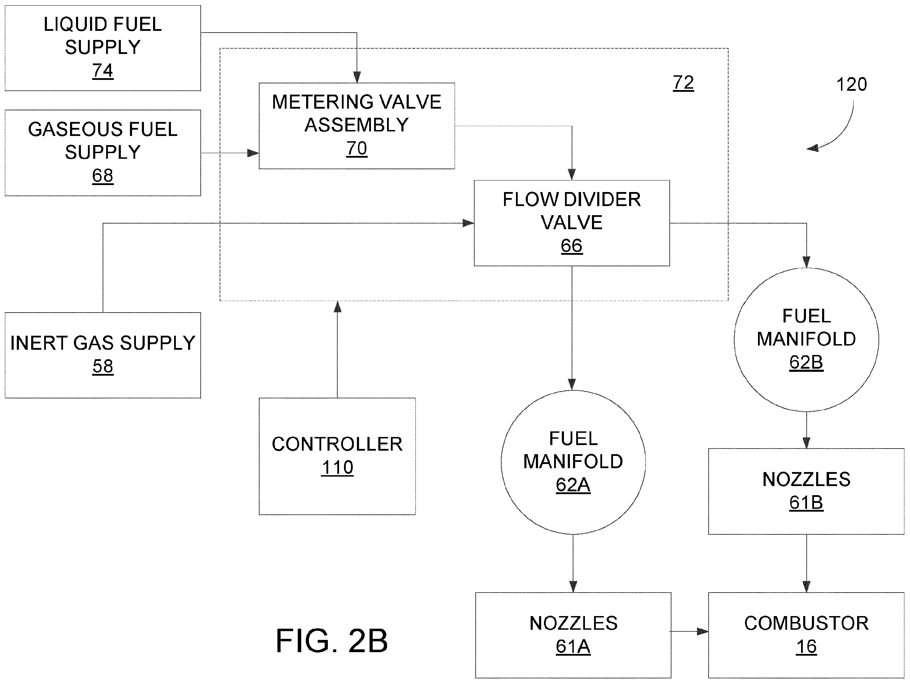

In some embodiments, and as shown in Fig. 2B, the fuel system 120 may be a dual fuel system, such that liquid fuel and gaseous fuel may be selectively used to operate the engine. Liquid fuel may be provided from a liquid fuel supply 74 to the fuel manifold 62A, the fuel manifold 62B, or both, via the arrangement 72. The arrangement 72 may be configured to supply liquid fuel from the liquid fuel supply 74 to the first manifold 62A in a first liquid fuel configuration of components of the arrangement 72. The arrangement 72 may be configured to supply liquid fuel from the liquid fuel supply 74 to the second manifold 62B in a second liquid fuel configuration of components of the arrangement 72. The arrangement 72 may be configured to supply liquid fuel from the liquid fuel supply 74 to the first manifold 62A and the second manifold 62B in a third liquid fuel configuration of components of the arrangement 72.

In some embodiments, the metering valve assembly 70 is dedicated to the gaseous fuel supply 68 and a separate metering valve assembly is provided for the liquid fuel supply 74 as part of the arrangement 72. Alternatively, the metering valve assembly 70 is shared between the liquid fuel supply 74 and the gaseous fuel supply 68 and configurable to permit/stop/regulate gaseous fuel flow and liquid fuel flow. In some embodiments, the flow divider valve 66 is dedicated to the gaseous fuel supply 68 and a separate flow divider valve is provided for the liquid fuel supply 74 as part of the arrangement 72. Alternatively, the flow divider valve 66 is shared between the liquid fuel supply 74 and the gaseous fuel supply 68 and configurable to permit/stop/regulate gaseous fuel flow and liquid fuel flow into each manifold. In some embodiments, the flow divider valve 66 is shared between the liquid fuel supply 74, the gaseous fuel supply 68, and the inert gas supply 58. In some embodiments, a separate flow divider valve is shared between the liquid fuel supply 74 and the inert gas supply 58. In some embodiments, each one of the liquid fuel supply, the gaseous fuel supply, and the inert gas supply 58 has a dedicated flow divider valve as part of the arrangement 72. Each dedicated flow divider valve may be fluidly connected to the first manifold 62A and the second manifold 62B for selectively permitting/stopping fluid flow therethrough.

Control of the arrangement 72 to purge one or more of the manifolds 62A, 62B is effected by the controller 110. When the engine is active, gaseous fuel is supplied to one or more manifold by setting the arrangement 72 of components to a fuel configuration. If the requested fuel is gaseous fuel, the controller 110 sets the arrangement 72 to a gaseous fuel configuration so as to permit and regulate the gaseous fuel to flow from the gaseous fuel supply 68 to the manifold(s) 62A, 62B. If the fuel system is a dual fuel system and the requested fuel is liquid fuel, the controller 110 sets the arrangement 72 to a liquid fuel configuration so as to permit and regulate the liquid fuel to flow from the liquid fuel supply 74 to the manifold(s) 62A, 62B.

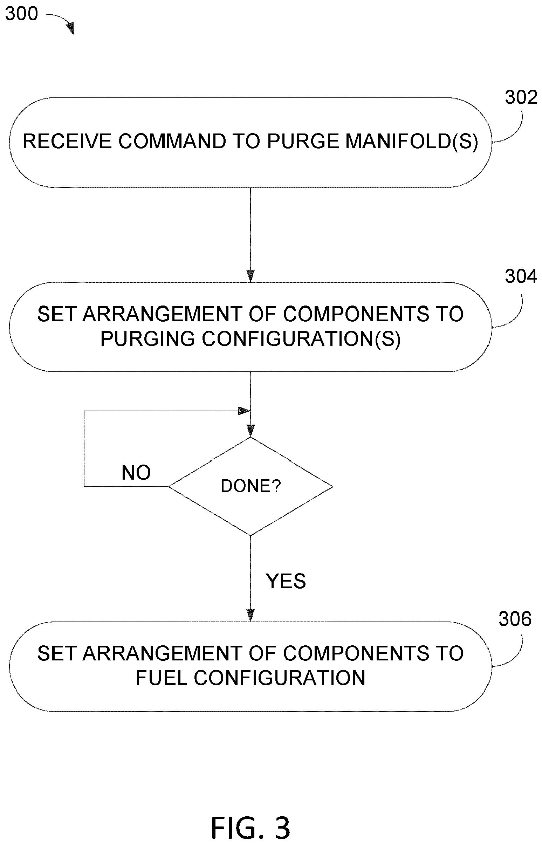

When a manifold purge is requested, inert gas is supplied from the inert gas supply 58 to the one or more manifold 62A, 62B. Fig. 3 is an example method 300 for purging a single manifold or multiple manifolds concurrently. At step 302, a command to purge one or more manifolds is received by the controller 110. In some embodiments, the purge command is a dedicated command, for example triggered by a maintenance crew through a maintenance computer or by a pilot through a cockpit interface of an aircraft. In some embodiments, the purge command is triggered in response to another sequence, procedure or command for the engine. For example, the purge command may be triggered by another maintenance procedure.

In some embodiments, the purge command forms part of an engine shutdown sequence. For example, a purge command may be generated by the controller 110 or another device in response to receipt by the controller 110 or another device of a request to shutdown the engine. In some embodiments, the purge command forms part of the engine shutdown sequence when a command to shutdown the engine is received as part of a regular or standard (i.e. non-emergency) shutdown request, and is excluded from an engine shutdown sequence when a command to shutdown the engine is received as part of an emergency shutdown request (e.g. an in-flight shutdown). Alternatively, the purge command forms part of any engine shutdown sequence, whether standard or emergency. In some embodiments, the purge command forms part of the engine shutdown sequence when the engine is operating with gaseous fuel. Alternatively, the purge command forms part of the engine shutdown sequence regardless of the type of fuel used to operate the engine.

In some embodiments, the purge command forms part of an engine start-up sequence. For example, a purge command may be generated by the controller 110 or another device in response to receipt by the controller 110 or another device of a request to start the engine. In some embodiments, the purge command forms part of the engine start-up sequence when the engine was previously operating with gaseous fuel. Alternatively, the purge command forms part of the engine start-up sequence regardless of the type of fuel previously used to operate the engine. In some embodiments, the purge command forms part of the engine start-up sequence for an on-ground engine start, and is excluded from a start-up sequence for an inflight engine restart. Alternatively, the purge command forms part of any engine start sequence. In some embodiments, the purge command forms part of only one of the start-up sequence and the shutdown sequence of the engine. Alternatively, the purge command forms part of both the start-up sequence and the shutdown sequence of the engine.

In response to receipt of the purge command, the controller 110 sets the arrangement of components to a purging configuration at step 304. If the arrangement 72 of components allows for concurrent or simultaneous purging of manifolds, for example if the flow divider valve 66 may be set to allow inert gas to flow to the first fuel manifold 62A and the second fuel manifold 62B concurrently, then multiple manifolds may be purged with inert gas at the same time using the method 300. When the purge is completed, the controller 110 sets the arrangement 72 of components back to a fuel configuration at step 306. A timer may be used to determine that the purge is completed, with the expected timing calculated based on component geometry and constant supply pressure. In some embodiments, step 306 is omitted from the method 300 and performed as part of a sequence where fuel is supplied to the manifold(s). If the method 300 forms part of a start-up sequence, step 306 may be performed as part of the start-up sequence, prior to supplying fuel to the combustor for ignition. If the method 300 forms part of a shutdown sequence, step 306 may be performed as part of the shutdown sequence in preparation for a subsequent start-up.

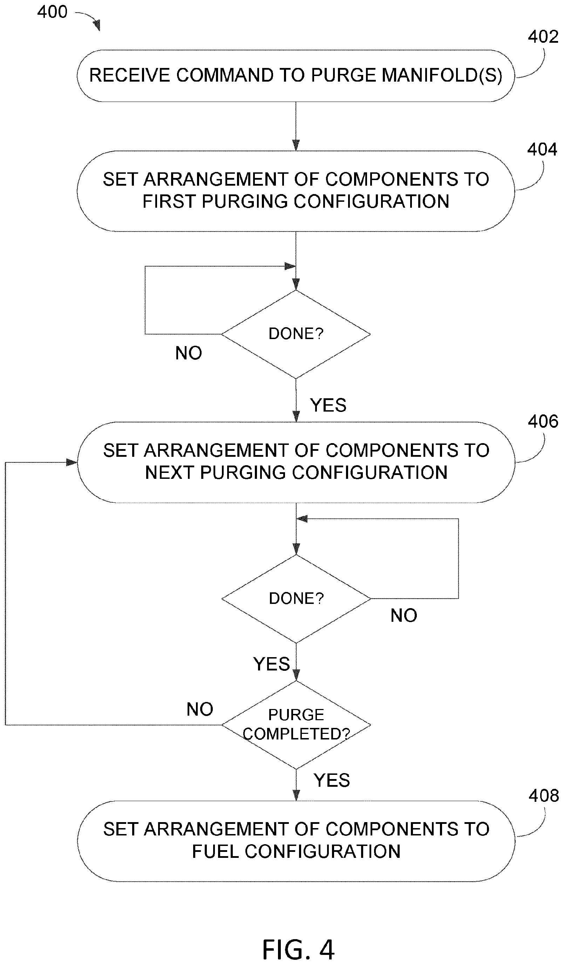

In some embodiments, manifolds of the fuel system 120 are purged sequentially. An example method 400 for purging two or more manifolds sequentially is shown in Fig. 4. At step 402, the purge command is received. In some embodiments, separate purge commands are received for each manifold to be purged. Alternatively, a single purge command will cause all manifolds to be purged. Also alternatively, a single purge command will cause predetermined manifolds to be purged. For example, only a first manifold of a plurality of interconnected manifolds may be purged, whereby the effect is obtained in all of interconnected manifolds. In another example, only primary manifolds are purged and secondary manifolds are unpurged. Parameters for purging the manifolds in response to the purge command(s) may be set by an engine operator or manufacturer.

At step 404, the controller 110 sets the arrangement 72 of components to a first purging configuration and inert gas is supplied to a manifold or a group of manifolds based on the first purging configuration. When purging based on the first purging configuration is completed, the controller 110 sets the arrangement 72 of components to a next purging configuration at step 406 and inert gas is supplied to another manifold or another group of manifolds based on the next purging configuration. For example, the first purging configuration may allow inert gas to be provided to the first manifold 62A, and the next purging configuration may allow inert gas to be provided to the second manifold 62B. In another example, the first purging configuration may allow inert gas to be provided to the first and second manifolds 62A, 62B, and the next purging configuration may allow inert gas to be provided to third and fourth manifolds. Oher embodiments may apply based on practical implementation.

Step 406 may be repeated any number of times for additional manifolds or groups of manifolds until all manifolds or groups of manifolds for which purging is commanded have been purged. In some embodiments, when purging is completed, the controller 110 may set the arrangement 72 of components to a fuel configuration at step 408. Step 408 may be omitted from the method 400 and performed as part of another sequence, similarly to step 306 of the method 300.

It will be understood that the methods and systems may be used when the engine is shutdown and compressed air, such as that provided through an air compressor of the engine, is unavailable for purging of the manifold(s).

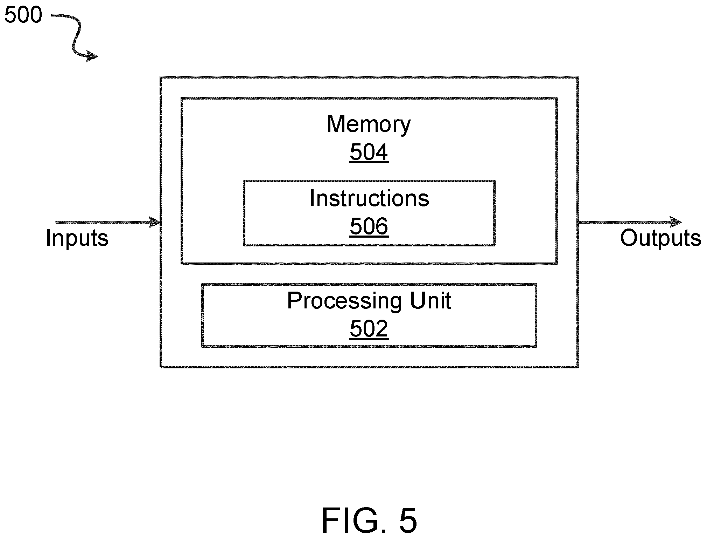

With reference to FIG. 5, there is illustrated an embodiment of a computing device 500 for implementing part or all of the methods 300, 400 described above. The computing device 500 can be used to perform part or all of the functions of the controller 110 of the engine 100. In some embodiments, the controller 110 is composed only of the computing device 500. In some embodiments, the computing device 500 is within the controller 110 and cooperates with other hardware and/or software components within the controller 110. In both cases, the controller 110 performs the methods 300, 400. In some embodiments, the computing device 500 is external to the controller 110 and interacts with the controller 110. In some embodiments, some hardware and/or software components are shared between the controller 110 and the computing device 500, without the computing device 500 being integral to the controller 110. In this case, the controller 110 can perform part of the methods 300, 400.

The computing device 500 comprises a processing unit 502 and a memory 504 which has stored therein computer-executable instructions 506. The processing unit 502 may comprise any suitable devices configured to cause a series of steps to be performed such that instructions 506, when executed by the computing device 500 or other programmable apparatus, may cause the functions/acts/steps specified in the methods 300, 400 described herein to be executed. The processing unit 502 may comprise, for example, any type of general-purpose microprocessor or microcontroller, a digital signal processing (DSP) processor, a CPU, an integrated circuit, a field programmable gate array (FPGA), a reconfigurable processor, other suitably programmed or programmable logic circuits, or any combination thereof.

The memory 504 may comprise any suitable known or other machine-readable storage medium. The memory 504 may comprise non-transitory computer readable storage medium, for example, but not limited to, an electronic, magnetic, optical, electromagnetic, infrared, or semiconductor system, apparatus, or device, or any suitable combination of the foregoing. The memory 504 may include a suitable combination of any type of computer memory that is located either internally or externally to device, for example random-access memory (RAM), read-only memory (ROM), electro-optical memory, magneto-optical memory, erasable programmable read-only memory (EPROM), and electrically-erasable programmable read-only memory (EEPROM), Ferroelectric RAM (FRAM) or the like. Memory 504 may comprise any storage means (e.g., devices) suitable for retrievably storing machine-readable instructions 506 executable by processing unit 502.

It should be noted that the computing device 500 may be implemented as part of a FADEC or other similar device, including an electronic engine control (EEC), engine control unit (EUC), engine electronic control system (EECS), an Aircraft Avionics System, and the like. In addition, it should be noted that the techniques described herein can be performed by a computing device 500 substantially in real-time.

The methods and systems described herein may be implemented in a high level procedural or object oriented programming or scripting language, or a combination thereof, to communicate with or assist in the operation of a computer system, for example the computing device 500. Alternatively, the methods and systems described herein may be implemented in assembly or machine language. The language may be a compiled or interpreted language. Program code for implementing the methods and systems may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon, or a computer program product. The computer program may comprise computer-readable instructions which cause a computer, or more specifically the processing unit 502 of the computing device 500, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, the methods 300, 400 may be combined with known manifold purging systems for liquid fuel, and/or with a manifold venting system (e.g. using a multi-directional valve to vent gaseous fuel to the atmosphere). Yet further modifications could be implemented by a person of ordinary skill in the art in view of the present disclosure, which modifications would be within the scope of the present technology.

## Claims

1. A method (300, 400) for operating an engine (100) coupled to a fuel system (120) having at least one fuel manifold (62A, 62B) configured to supply fuel to a combustor (16) of the engine (100), the method (300, 400) comprising:
when the engine (100) is active, supplying fuel to the combustor (16) by supplying gaseous fuel from a gaseous fuel supply (68) to the at least one fuel manifold (62A, 62B); and
when the engine (100) is inactive, purging the at least one fuel manifold (62A, 62B) by supplying inert gas from an inert gas supply (58) to the at least one fuel manifold (62A, 62B).

2. The method (300, 400) of claim 1, wherein the gaseous fuel and the inert gas are supplied to the at least one fuel manifold (62A, 62B) via a common flow divider valve (66).

3. The method (300, 400) of claim 1 or 2, wherein purging the at least one fuel manifold (62A, 62B) comprises purging the at least one fuel manifold (62A, 62B) as part of an engine (100) shutdown procedure or as part of an engine (100) start-up procedure.

4. The method (300, 400) of any one of claims 1 to 3, wherein purging the at least one fuel manifold (62A, 62B) comprises purging a plurality of fuel manifolds (62A, 62B) sequentially or concurrently.

5. The method (300, 400) of any one of claims 1 to 4, wherein the at least one fuel manifold (62A, 62B) comprises a plurality of interconnected fuel manifolds (62A, 62B), and purging the at least one fuel manifold (62A, 62B) comprises supplying the inert gas to the plurality of interconnected fuel manifolds (62A, 62B).

6. The method (300, 400) of any one of claims 1 to 5, wherein purging the at least one fuel manifold (62A, 62B) comprises:
receiving a command to purge the at least one manifold (62A, 62B); and
in response to the command to purge, setting an arrangement (72) of components connected between the inert gas supply (58) and the at least one manifold (62A, 62B) to a purging configuration, and preferably further comprising setting the arrangement (72) of components to a fuel configuration when the purging of the at least one fuel manifold (62A, 62B) is completed.

7. A system for operating an engine (100) having at least one fuel manifold (62A, 62B) configured to supply fuel to a combustor (16) of the engine (100), the system comprising:
a processor; and
a non-transitory computer-readable medium having stored thereon program code executable by the processor for:
when the engine (100) is active, supplying fuel to the combustor (16) by supplying gaseous fuel from a gaseous fuel supply (68) to the at least one fuel manifold (62A, 62B); and
when the engine (100) is inactive, purging the at least one fuel manifold (62A, 62B) by supplying inert gas from an inert gas supply (58) to the at least one fuel manifold (62A, 62B).

8. The system of claim 7, wherein the gaseous fuel and the inert gas are supplied to the at least one fuel manifold (62A, 62B) via a common flow divider valve (66).

9. The system of claim 7 or 8, wherein purging the at least one fuel manifold (62A, 62B) comprises purging the at least one fuel manifold (62A, 62B) as part of an engine (100) shutdown procedure or as part of an engine (100) start-up procedure.

10. The system of any one of claims 7 to 9, wherein purging the at least one fuel manifold (62A, 62B) comprises purging a plurality of fuel manifolds (62A, 62B) sequentially or concurrently.

11. The system of any one of claims 7 to 10, wherein the at least one fuel manifold (62A, 62B) comprises a plurality of interconnected fuel manifolds (62A, 62B), and purging the at least one fuel manifold (62A, 62B) comprises supplying the inert gas to the plurality of interconnected fuel manifolds (62A, 62B).

12. The system of any one of claims 7 to 11, wherein purging the at least one fuel manifold (62A, 62B) comprises:
receiving a command to purge the at least one manifold (62A, 62B); and
in response to the command to purge, setting an arrangement (72) of components connected between the inert gas supply (58) and the at least one manifold (62A, 62B) to a purging configuration.

13. The system of claim 12, wherein the program code is further executable for setting the arrangement (72) of components to a fuel configuration when the purging of the at least one fuel manifold (62A, 62B) is completed.

14. A system comprising:
an engine (100) having a combustor (16);
a fuel system (120) coupled to the engine (100), the fuel system (120) comprising an arrangement (72) of components connected between an inert gas supply (58), a gaseous fuel supply (68) and at least one fuel manifold (62A, 62B), the at least one fuel manifold (62A, 62B) fluidly connected to the combustor (16) via at least one set of nozzles (61A, 61B), the arrangement (72) configurable between a fuel configuration to allow gaseous fuel to flow from the gaseous fuel supply (68) to the at least one manifold (62A, 62B) and a purge configuration to allow inert gas to flow from the inert gas supply (58) to the at least one fuel manifold (62A, 62B); and
a controller (110) coupled to the engine (100) and the fuel system (120), and configured for, in response to receiving a command to purge the at least one fuel manifold (62A, 62B), setting the arrangement (72) of components to the purging configuration.

15. The system of claim 14, wherein the controller (110) is further configured for setting the arrangement (72) of components to the fuel configuration when the purging of the at least one fuel manifold (62A, 62B) is completed.
